# EUROPÄISCHE PATENTSCHRIFT

(11) **EP 0 572 793 B1**
(45) Veröffentlichungstag und Bekanntmachung des Hinweises auf die Patenterteilung: **21.02.1996**
(21) Anmeldenummer: 93106687.2
(22) Anmeldetag: 24.04.1993
(51) Int. Cl.: F16F 15/04, F16F 15/06, F16F 1/36, G12B 17/08

(54) **Vorrichtung zum Abfangen von Stössen**
Device to absorb shocks
Dispositif pour l'absorption des chocs

(30) Priorität: 05.06.1992 DE 4218586
(43) Veröffentlichungstag der Anmeldung: 08.12.1993
(73) Patentinhaber: Daimler-Benz Aerospace Aktiengesellschaft, D-80995 München (DE)
(72) Erfinder: Hornung, Ernst, W-2805 Stuhr (DE); Maager, Hans, W-2862 Worpswede (DE); Öry, Huba, Prof. Dr., W-5100 Aachen (DE)
(74) Vertreter: Hansmann, Dierk, Dipl.-Ing.

(56) Entgegenhaltungen:
- EP-A- 0 062 584
- FR-A- 2 319 839
- GB-A- 685 356
- GB-A- 1 511 692
- US-A- 3 066 905
- US-A- 4 200 257

## Beschreibung

Die Erfindung betrifft eine Vorrichtung zum Abfangen dynamischer Beanspruchungen, insbesondere pyrotechnischer Stöße, mit einer Struktur und einem an dieser gehalterten Trägerkörper mittels zwischen der Struktur und dem Trägerkörper angeordneter elastischer Elemente, wobei die elastischen Elemente aus Federelementen bestehen, die eine zugleich niedrige Dämpfungskonstante aufweisen, die Halterungen des Trägerkörpers an den Federelementen derart ausgebildet sind, daß die Auflageflächen auf ein Minimum beschränkt sind, so daß an den Auflageflächen im wesentlichen keine Reibung entsteht, und wobei die Federelemente blattfederartig ausgebildet sind.

Hohe kurzzeitige Belastungen treten unter anderem im Bereich der Raumfahrttechnik beim Absprengen kompletter Raketenstufen auf. Solche, auch als pyrotechnische Schocks bezeichnete Belastungen führen insbesondere bei den zu transportierenden Nutzlasten, wie Instrumententräger , aber auch bei anderen Ausrüstungsteilen zu hohen dynamischen Beanspruchungen und damit teilweise zur Beschädigung dieser Komponenten. Um derartige Belastungen zu eliminieren oder wenigstens auf ein Minimum herabzusetzen, stellt es eine bekannte Maßnahme dar, schockempfindliche Bauteile in oder auf Trägerkörpern zu haltern, die mit der Struktur der Rakete über Dämpfungselemente verbunden sind, wobei diese Dämpfungselemente in der Regel aus viskoelastischem Material bestehen. Da jedoch insbesondere bei pyrotechnischen Schocks sehr hohe Stoßgeschwindigkeiten auftreten, wird bei diesem Dämpfungselementen zusätzlich zur Federkraft auch eine Dämpfungskraft übertragen, die zu einer erheblichen Krafteinwirkung auf die stoßempfindlichen Bauteile führen kann.

Nach der EP-A-0 062 584 ist gattungsgemäß eine Anordnung zum Abfangen dynamischer Beanspruchungen zwischen einer Struktur und einem an dieser gehalterten Trägerkörper durch elastische Elemente mit niedriger Dämpfungskonstante bekannt. Hierbei sind Federelemente vorgesehen, die blattfederartig ausgebildet sind.

Aufgabe der Erfindung ist es daher, Vorrichtungen der der genannten Art derart weiterzubilden, daß sie auftretende pyrotechnische Stöße möglichst vollständig abfängt und dabei gute Dämpfungseigenschaften im niederfrequenten Bereich aufweist.

Diese Erfindung löst diese Aufgabe mit einer Vorrichtung gemäß Patentanspruchs 1.

Dadurch, daß die erfindungsgemäß vorgesehenen Federelemente so gestaltet sind, daß sie neben einer geringen Dämpfungskonstante auch eine möglichst niedrige Eigenfrequenz aufweisen, ist es möglich, pyrotechnische Stöße insbesondere auch im Bereich niedriger Frequenzen nahezu vollständig zu absorbieren. Auf diese Weise werden, anders als bei Dämpfungselementen aus viskoelastischen Material, stoßempfindliche Bauteile auch im niederfrequenten Bereich zuverlässig gegen Schockeinwirkungen geschützt. Vorteilhafte Weiterbildungen der Erfindung, die insbesondere die Ausbildung der Federelemente betreffen, sind in den weiteren Patentansprüchen angegeben.

Nachfolgend soll die Erfindung anhand eines in der Zeichnung dargestellten Ausführungsbeispieles näher erläutert werden. Es zeigen:
- Fig. 1: eine Plattform, die über Federelemente an einer Struktur gehaltert ist,
- Fig. 2: eine seitliche Ansicht der in Fig. 1 dargestellten Anordnung,
- Fig. 3: die Anordnung gemäß Fig. 1 in perspektivischer Darstellung **und**
- Fig. 4: ein Federelement, ebenfalls in perspektivischer Darstellung.

In den Figuren sind gleiche Bauteile mit den gleichen Bezugszeichen versehen.

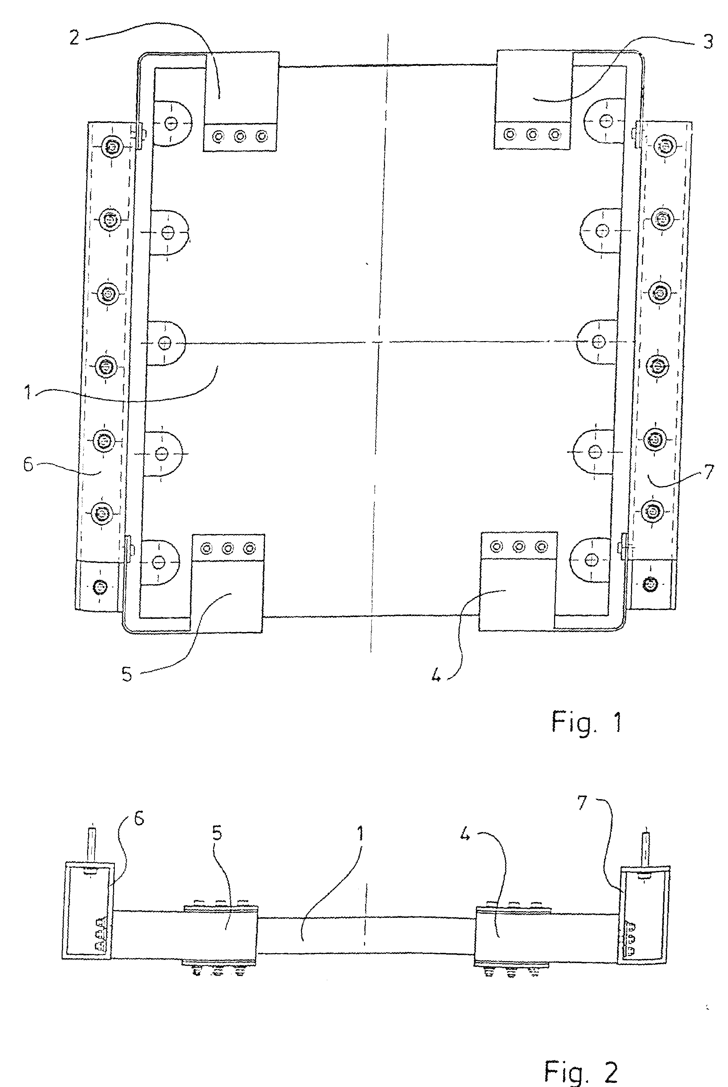

Bei der in den Figuren 1 bis 3 dargestellten Anordnung handelt es sich um eine Plattform 1 zur Aufnahme von schockempfindlichen Komponenten für eine Raumflugmission. Die Plattform 1 ist über insgesamt vier Federelemente 2 bis 5 an zwei Strukturelementen 6 und 7 eines Raumflugkörpers gehaltert. Die Federelemente 2 bis 5 sind dabei so ausgebildet, daß sie eine mögliche Bewegung der Plattform 1 bezüglich sechs möglicher Freiheitsgrade, drei der Translation und drei der Rotation, abfedern.

Ferner ist für die Funktionsweise der Anordnung von Bedeutung, daß die Federelemente 2 bis 5 bezüglich möglicher Oszillation entsprechend dieser sechs Freiheitsgrade sehr niedrige Eigenfrequenzen und eine geringe Dämpfung aufweisen. Schließlich ist wichtig, daß die Befestigung der Plattform 1 an den Federelementen 2 bis 5 so ausgebildet ist, daß der Kontakt zwischen den Federelementen 2 bis 5 und der Plattform 1 nur über eine extrem kleine Auflagefläche erfolgt, um auf diese Weise die Reibungskräfte auf ein Minimum zu reduzieren. Zu diesem Zweck sind anstelle der sonst üblichen Unterlegscheiben an den Verschraubungspunkten dünnwandige, von einem Rohr abgeschnittene Ringe getreten, die eher als Abstandshalter zu bezeichnen sind.

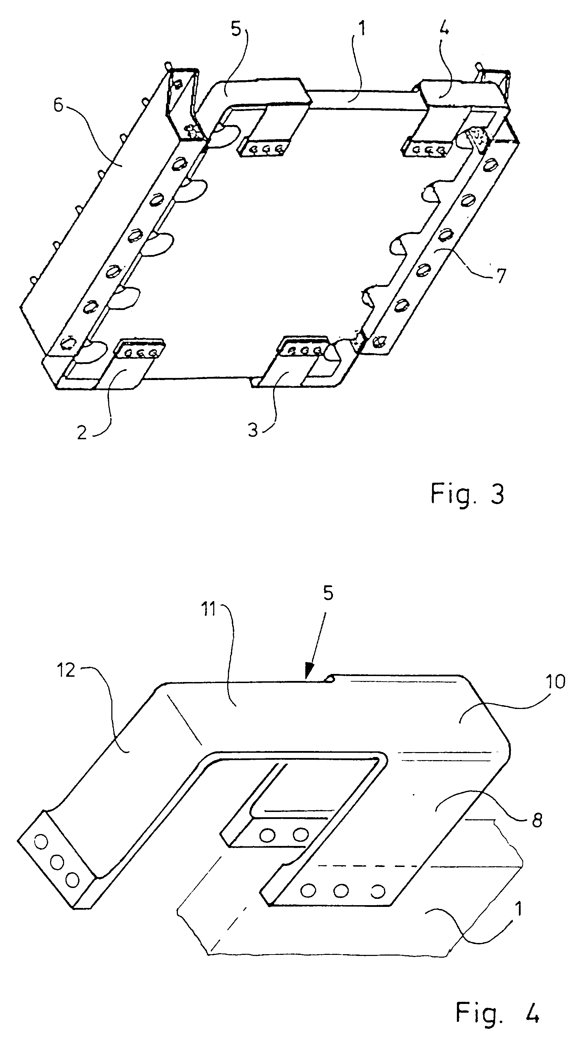

Der Aufbau der bei dem hier dargestellten bevorzugten Ausführungsbeispiel der Erfindung eingesetzten Federelemente 2 bis 5 wird aus Fig. 4 am Beispiel des Federelementes 5 ersichtlich. Dieses besteht zunächst aus einem etwa U-förmig ausgebildeten Teilbereich, an den, im Bereich des zwischen zwei schenkeln 8 und 9 befindlichen Stegs 10, ein etwa rechtwinkliger Ansatz 11, 12 einstückig angeformt ist. Der abgewinkelte Teilbereich 12 dieses Ansatzes weist in etwa die gleiche Länge wie die beiden Schenkel 8 und 9 auf. Die Endbereiche sowohl der Schenkel 8 und 9 als auch des Ansatzes 11, 12 sind verstärkt ausgebildet und weisen Durchgangsbohrungen zur Aufnahme der Verschraubungen mit der Plattform 1 einerseits, die zwischen den beiden Schenkeln 8 und 9 gehaltert ist, sowie mit der Struktur 6, 7 andererseits auf, die über den Ansatz 11, 12 erfolgt.

Die hier beschriebenen Federelemente 2 bis 5 sind jeweils in einem Stück aus einem federelastischen metallischen Werkstoff gefräst. Es ist aber im Rahmen der Erfindung auch möglich, die Federelemente mittels eines dafür geeigneten Fertigungsverfahrens aus einem Faserverbundwerkstoff herzustellen. Ferner besteht die Möglichkeit, derartige Federelemente aus zwei Teilelementen, einem U-förmigen sowie einem rechtwinkligen, anzufertigen, wobei diese Teilelemente miteinander verschraubt, verlötet, verschweißt oder verklebt werden.

Die vorstehend beschriebenen Federelemente 2 bis 5 sind jeweils, jedes für sich genommen, in der Lage Bewegungen in drei verschiedenen Richtungen abzufedern.

Wichtig ist dabei daß die Eigenfrequenzen der Federelemente möglichst niedrig sind, daß sie eine nur geringe Dämpfung aufweisen und daß, wie bereits erwähnt, die Reibung an den Verbindungsstellen zwischen den Federelementen und der Plattform minimal wird. Auf diese Weise wird erreicht, daß auf die Strukturelemente 6, 7 einwirkende pyrotechnische Stöße auch im niederfrequenten Bereich nicht auf die Plattform übertragen werden und daß somit Ausrüstungsteile, die sich auf der Plattform befinden, zuverlässig gegen die Einwirkungen derartiger pyrotechnischer Stöße geschützt sind.

## Patentansprüche

1. Vorrichtung zum Abfangen dynamischer Beanspruchungen, insbesondere pyrotechnischer Stöße, mit einer Struktur (6,7) und einem an dieser gehalterten Trägerkörper (1) mittels zwischen der Struktur (6,7) und dem Trägerkörper (1) angeordneter elastischer Elemente, wobei die elastischen Elemente aus Federelementen (2-5) bestehen, die eine zugleich niedrige Dämpfungskonstante aufweisen, die Halterungen des Trägerkörpers (1) an den Federelementen (2-5) derart ausgebildet sind, daß die Auflageflächen auf ein Minimum beschränkt sind, so daß an den Auflageflächen im wesentlichen keine Reibung entsteht, und wobei die Federelemente (2-5) blattfederartig ausgebildet sind, dadurch gekennzeichnet, daß die Federelemente (2-5) aus einem U-förmigen Teilbereich (8-10) bestehen, daß vom Steg (10) des U-förmigen Teilbereichs (8-10) senkrecht zur den U-Profilquerschnitt enthaltenen Ebene ein erster Teilbereich (11) eines Ansatzes (11,12) in der den Steg enthaltenen Ebene absteht, und daß ein zweiter Teilbereich (12) des Ansatzes (11,12) im wesentlichen rechtwinklig zum ersten Teilbereich (11) und parallel zur den U-Profilquerschnitt enthaltenen Ebene sich erstreckt, wobei die Halterungen des jeweiligen Federelementes (2-5) am offenen Ende des zweiten Teilbereichs (12) und an den offenen Enden der beiden Schenkel (9,11) des U-förmigen Teilbereichs (8-10) angeordnet sind.

2. Vorrichtung nach Anspruch 1, dadurch gekennzeichnet, daß der Ansatz (11, 12) einstückig angeformt ist.

3. Vorrichtung nach Anspruch 1 oder 2, dadurch gekennzeichnet, daß die Federelemente (2-5) aus einem Faserverbundwerkstoff bestehen.

## Claims

1. Apparatus for absorbing dynamic stresses, particularly pyrotechnic shocks, with a structure (6, 7) and a support body (1) mounted thereon by means of elastic elements disposed between the structure (6, 7) and the support body (1), wherein the elastic elements consist of spring elements (2-5) which at the same time have a low damping constant, the mountings of the support body (1) on the spring elements (2-5) are constructed in such a way that the bearing surfaces are restricted to a minimum so that substantially no friction occurs on the bearing surfaces, and wherein the spring elements (2-5) are constructed like leaf springs, characterised in that the spring elements (2-5) consist of a U-shaped portion (8-10), that a first portion (11) of an extension (11, 12) projects, in the plane containing the crosspiece, from the crosspiece (10) of the U-shaped portion (8-10) perpendicular to the cross-section of the U shape, and that a second portion (12) of the extension (11, 12) extends substantially at right angles to the first portion (11) and parallel to the plane containing the cross-section of the U shape, wherein the mountings of the particular spring element (2-5) are disposed on the open end of the second portion (12) and on the open ends of the two arms (9, 11) of the U-shaped portion (8-10).

2. Apparatus according to Claim 1, characterised in that the projection (11, 12) is formed integrally.

3. Apparatus according to Claim 1 or 2, characterised in that the spring elements (2-5) are made from a composite fibre material.

## Revendications

1. Dispositif destiné à l'absorption des charges dynamiques et plus particulièrement des chocs pyrotechniques, composé d'une structure (6, 7) et d'un support (1) maintenu sur cette structure (6, 7) au moyen d'éléments élastiques disposés entre la structure (6, 7) et le support (1), lesdits éléments élastiques étant composés d'éléments à ressort (2 - 5) qui présentent une constante d'amortissement faible, les fixations du support (1) sur les éléments à ressort (2 - 5) étant conçues de telle sorte que les surfaces portantes sont réduites au minimum de manière telle que en substance aucun frottement ne se produit sur les surfaces portantes, et les éléments à ressort (2 - 5) étant conçus comme des ressorts à lames, **caractérisé en ce que** les éléments à ressort (2 - 5) présentent une section (8 - 10) en forme de U, en ce que à partir de la rainure (10) de la section (8 - 10) en forme de U et perpendiculairement au plan contenant la section transversale en forme de U une première partie (11) d'une saillie (11, 12) est placée à distance dans le plan contenant la rainure, et en ce que une deuxième partie (12) de la saillie (11, 12) s'étend principalement perpendiculairement à la première partie (11) et parallèlement au plan contenant la section transversale en forme de U, les fixations de chacun des éléments à ressort (2 - 5) étant disposées à l'extrémité libre de la deuxième partie (12) et aux extrémités libres des deux côtés (9, 11) de la section (8 - 10) en forme de U.

2. Dispositif selon la revendication 1, caractérisé en ce que la saillie (11, 12) est formée en une seule pièce.

3. Dispositif selon l'une ou l'autre des revendications 1 et 2, caractérisé en ce que les éléments à ressort (2 - 5) sont fabriqués à partir d'un matériau composite renforcé par des fibres.
